# EUROPEAN PATENT SPECIFICATION

(11) **EP 4 003 751 B1**
(45) Date of publication and mention of the grant of the patent: **18.02.2026**
(21) Application number: 20844219.4
(22) Date of filing: 21.07.2020
(51) Int. Cl.: C09D 11/101, C09D 11/30, C08J 7/04, C08J 7/046, C08K 3/36, B32B 27/30, B44C 1/10, B44C 3/02, B05D 7/00, B41M 5/00, B41M 7/00, B05D 1/26, B05D 5/00

(54) **DECORATIVE FILM AND METHOD FOR PRODUCING THE SAME**
ZIERFOLIE UND VERFAHREN ZU IHRER HERSTELLUNG
FILM DÉCORATIF ET SON PROCÉDÉ DE PRODUCTION

(30) Priority: 24.07.2019 JP 2019136406
(43) Date of publication of application: 01.06.2022
(73) Proprietor: 3M Innovative Properties Company, Saint Paul, Minnesota 55133-3427 (US)
(72) Inventor: ONO, Katsuya, Tokyo 141-8684 (JP); SAITO, Koji, Tokyo 141-8684 (JP); KOLB, Brant U., Saint Paul, Minnesota 55133-3427 (US)
(74) Representative: Vossius & Partner Patentanwälte Rechtsanwälte mbB
(86) International application number: PCT/IB2020/056860
(87) International publication number: WO 2021/014362

(56) References cited:
- EP-A1- 3 437 858
- JP-A- 2004 249 586
- JP-A- 2015 091 637
- JP-A- 2016 093 979
- US-A- 4 849 265
- US-A1- 2016 200 082
- US-A1- 2016 214 345

## Description

### Technical Field

The present disclosure relates to a decorative film and a method of producing the same.

### Background

In recent years, instead of painting, films having surface protection properties are used, for example.

Patent Document 1 (JP 2017-524561 T) describes a conformable, removable film-based article including a conformable film having a first major surface and a second major surface, a pressure sensitive adhesive layer on the first major surface of the conformable film, and a discontinuous, patterned protective layer on at least a portion of the second major surface of the conformable film.

Patent Document 2 (JP 2016-093979 A) describes a film for surface protection including a hardcoat formed from dots on a substrate film, each of the dots being a cured product of a curable composition, and having an area of a head-top surface of the dot being from 1 × 10-6 to 1 mm2, and a center-to-center distance between dots being from 10 to 1000 µm, and the number of dots per 1 cm2 of coating film being from 100 to 1 × 106.

US 2016/0200082 A1 and US 2016/0214345 A1 describe further examples of decorative films.

### Summary

### Technical Problem

Surface protection properties are desired also in the field of decorative films. For example, when a decorative film is applied to an adherend using a squeegee, or a person or luggage hits a decorative film, the surface of the decorative film may get scratched, causing the appearance to be impaired. To prevent the scratching, a hardcoat layer may be applied to the surface of the decorative film. However, in this case, while a scratch can be prevented, if the decorative film is applied to, for example, a curved surface or bent portion, cracks may occur in the hardcoat layer that does not exhibit elongation properties.

The present disclosure provides a decorative film having scratch resistance and elongation properties.

### Solution to Problem

The invention is defined by the claims. According to an embodiment of the present disclosure, provided is a decorative film including on a substrate film sequentially a flexible resin layer and an independent dot-patterned hardcoat layer, the decorative film having an elongation percentage of 10% or greater.

According to another embodiment of the present disclosure, provided is a method of producing a decorative film, the method including: forming a flexible resin layer by applying a first ionizing radiation-curable ink using an inkjet printer on a substrate film and irradiating with ionizing radiation to cure the first ionizing radiation-curable ink; and forming an independent dot-patterned hardcoat layer by applying a second ionizing radiation-curable ink using an inkjet printer on the flexible resin layer and irradiating with ionizing radiation to cure the second ionizing radiation-curable ink.

### Advantageous Effects of Invention

According to the present disclosure, a decorative film having scratch resistance and elongation properties can be provided.

The above description will not be construed to mean that all embodiments of the present invention and all advantages of the present invention are disclosed.

### Brief Description of the Drawings

FIG. 1A is a cross-sectional view of a decorative film which is not according to the present invention. FIG. 1B is a plan view of this decorative film.
FIG. 2A is a cross-sectional view of a decorative film according to an embodiment of the present invention. FIG. 2B is a plan view of this decorative film.

### Detailed Description

Although representative embodiments of the present invention will now be described in greater detail for the purpose of illustration with reference to the drawings, the present invention is not limited to these embodiments. As for the reference signs in the drawings, elements denoted by similar reference signs in different drawings indicate similar or corresponding elements.

As used herein, "film" also includes an article referred to as a "sheet."

As used herein, for example, "on" as in "a layer disposed on a substrate film" intends the layer being disposed directly on the substrate film, or the layer being indirectly disposed on the substrate film with another layer interposed between the layer and the substrate film.

As used herein, "independent dot pattern" intends a condition where adjacent dots are scattered without contact.

As used herein, "joined dot pattern" intends a condition where adjacent dots are bonded through at least one point.

For "flexible resin layer" in the present disclosure, "continuously printed layer" refers to a layer on which the resin layer is printed continuously over the substantially entire face of its region to be printed (continuous layer) regardless of a printing method. Meanwhile, unlike the continuously printed layer, "discontinuously printed layer" refers to a layer on which the resin layer is printed discontinuously on its region to be printed (discontinuous layer), that is, for example, a layer with its region to be printed exposed at least through a portion of the region where the resin layer is formed. Typically, "discontinuously printed layer" includes an aspect where a printed layer formed with the "joined dot pattern" described above, and refers to a condition where an exposed face of the region to be printed repeatedly appears in the region where the resin layer is formed.

The "inkjet printed layer" in the present disclosure refers to a layer formed by inkjet printing.

As used herein, "curing" may also include the concepts commonly referred to as "crosslinking."

As used herein, "substantially" means to include variations caused by manufacturing errors or the like, and it may be intended that approximately ±20% variation is acceptable.

As used herein, "transparent" means that an average transmittance in a visible light region (wavelength from 400 nm to 700 nm) is 80% or greater, and may be desirably 85% or greater, or 90% or greater.

As used herein, "translucent" means that an average transmittance in a visible light region (wavelength from 400 nm to 700 nm) is less than 80%, and may be desirably 75% or less, and may be 10% or greater, or 20% or greater, and is intended to mean that an underlying layer is not completely hidden.

As used herein, "(meth)acrylic" means acrylic or methacrylic, and "(meth)acrylate" means acrylate or methacrylate.

Hereinafter, the decorative film according to the present disclosure will be described.

The decorative film according to the present disclosure includes on a substrate film sequentially a flexible resin layer and an independent dot-patterned hardcoat layer. By including an independent dot-patterned hardcoat layer, scratch resistance can be imparted, and bending and stretching of the film can be performed while suppressing the occurrence of, for example, cracks because the hardcoat layer formed on the flexible resin layer has the independent dot pattern. According to the invention, a decorative film capable of being stretched by 10% or greater can be obtained.

The decorative film according to the present disclosure has an independent dot-patterned hardcoat layer. In the independent dot-patterned hardcoat layer, adjacent dots are scattered without contact, and thus even when the hardcoat layer is bent or stretched, cracking of the hardcoat layer can be reduced or prevented. The independent dot-patterned hardcoat layer may be directly arranged on the flexible resin layer described below or may be indirectly arranged, for example, with a bonding layer interposed between the independent dot-patterned hardcoat layer and the flexible resin layer; however, from the perspectives of scratch resistance and productivity, the independent dot-patterned hardcoat layer is preferably directly arranged on the flexible resin layer.

The independent dot pattern can be formed by, for example, embossing or a known printing method, such as inkjet printing, screen printing, flexographic printing, or gravure printing; however, for example, from the perspective of productivity, the independent dot pattern is preferably formed by an inkjet printing method. Each dot of the independent dot pattern may be any of the following: transparent, translucent, or opaque.

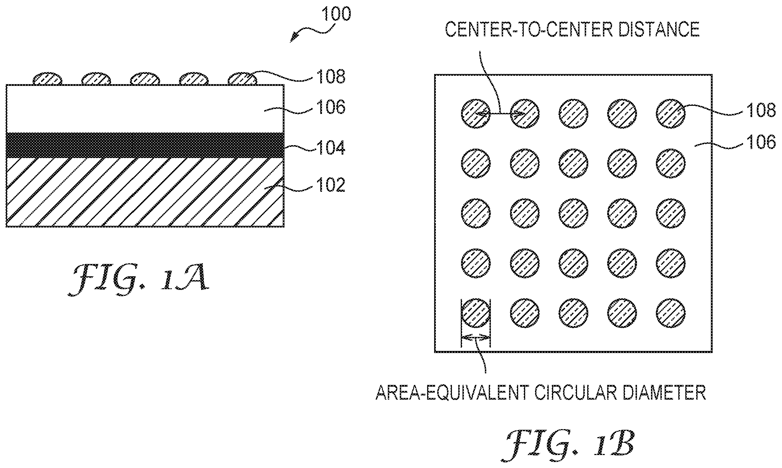

The shape of the dot is not limited to a particular shape. For example, in a case where the decorative film is viewed from above as illustrated in FIG. 1B, the shape may be substantially polygonal (e.g., substantially triangular, substantially square, substantially pentagonal, or substantially hexagonal) or substantially spherical or may be in an irregular shape. The dot shape may include one type of shape as illustrated in FIGS. 1A and 1B or may include a combination of multiple types of shapes. The shape of an upper portion of the dot is also not limited to a particular shape. For example, the upper portion shape may have a flat surface or may have a curved surface as illustrated in FIG. 1A; however, from the perspective of scratch resistance, the upper portion shape preferably has a curved surface.

The shape of a pattern on the dot is also not limited to a particular shape. For example, the pattern shape may be in a regular shape as illustrated in FIG. 1B or an irregular shape; however, from the perspective of preventing unevenness in scratch resistance, a regular pattern shape is preferred.

The size of the dot shape is not limited to a particular size. The size of the dot shape can be defined by, for example, an area-equivalent circular diameter. For example, the area-equivalent circular diameter may be a diameter obtained by conversion into a circular shape having the same area as a projected area of the dot shape observed through an optical microscope. The area-equivalent circular diameter may be defined to be an average value for 10 or more dots. The area-equivalent circular diameter of the dot shape may be 30 µm or greater, 50 µm or greater, 80 µm or greater, or 100 µm or greater, and may be 600 µm or less, 550 µm or less, or 500 µm or less, from the perspective of scratch resistance.

The maximum height of the dot is 15 µm or greater, and more preferably 20 µm or greater. Although the principle is not clear, it is conceived that, in the case where the maximum height of the dot is 15 µm or greater, embedding of the dot into the flexible resin layer by force applied to the dot can be reduced or prevented, and thus the scratch resistance can be further enhanced. The upper limit of the maximum height of the dot is not limited to a particular height, and, for example, may be set as 100 µm or less, 90 µm or less, or 80 µm or less. Note that, since the flexible resin layer is a discontinuously printed layer, the maximum height of the dot can be defined as a length of a perpendicular line extended from a top of the dot to a face that is horizontal to a highest position of a protrusion (e.g., dot of joined dots) in a contact region with the protrusion of the discontinuously printed layer with which the dot of the hardcoat layer is in contact and that is parallel with a bottom face of the decorative film.

The spacing of the dot is not limited to a particular spacing. The spacing of the dot can be defined as a center-to-center distance of dots as illustrated in FIG. 1B, for example. Note that, as to a center-to-center distance of dots, for example, in the case of FIG. 1B, while a center-to-center distance of laterally adjacent dots and a center-to-center distance of diagonally adjacent dots can possibly be considered, out of these, the one with the minimum distance is defined to be the center-to-center distance of dots. That is, in the case of FIG. 1B, the center-to-center distance of laterally adjacent dots corresponds to the center-to-center distance of dots.

The center-to-center distance may be 40 µm or greater, 60 µm or greater, 80 µm or greater, or 100 µm or greater, and may be 800 µm or less, 700 µm or less, or 600 µm or less, from the perspective of scratch resistance.

For example, in the case where dots have irregular shapes, the spacing between dots may be also defined by a minimum distance and a maximum distance between the dots. From the perspective of scratch resistance, the minimum distance may be 10 µm or greater, 15 µm or greater, or 20 µm or greater, and may be 300 µm or less, 250 µm or less, or 200 µm or less, and the maximum distance may be 40 µm or greater, 60 µm or greater, 80 µm or greater, or 100 µm or greater, and may be 800 µm or less, 700 µm or less, or 600 µm or less.

The number of dots per unit area is not limited to a particular number; however, from the perspective of scratch resistance, for example, the number of dots may be 10000 or more, 100000 or more, or 1000000 or more, and may be 625000000 or less, 500000000 dots, or 300000000 or less, per 1 cm².

Examples of the typical resin contained in the hardcoat layer include resins obtained by polymerizing curable monomers and/or curable oligomers that can be cured by ionizing radiation, and resins obtained by polymerizing sol-gel glasses. Specific examples of such a resin include (meth)acrylic resins, urethane-based resins, epoxy-based resins, phenol-based resins, and polyvinyl alcohol. Among these, from the perspective of scratch resistance, a (meth)acrylic resin is preferred.

The proportion of the resin in the hardcoat layer is not limited to a particular proportion and, for example, may be 5 mass% or greater, 10 mass% or greater, or 15 mass% or greater, and may be 100 mass% or less, 90 mass% or less, 80 mass% or less, 70 mass% or less, 60 mass% or less, or 50 mass% or less, relative to the total mass of the hardcoat layer.

From the perspectives of productivity and scratch resistance, the hardcoat layer preferably contains a cured product of an ionizing radiation-curable ink. In the present disclosure, the ionizing radiation-curable ink means an ink that can be cured by ionizing radiation, such as UV radiation, X rays, y rays, and electron beam. The ionizing radiation-curable ink contains a curable monomer, such as a monofunctional and/or polyfunctional (meth)acrylate monomer, or a curable oligomer, and may optionally contain a photopolymerization initiator and an organic solvent. In the case where an electron beam irradiation is employed, no photopolymerization initiator needs to be used.

As the curable monomer or curable oligomer, a curable monomer or curable oligomer known in the technical field of hardcoat may be used. These may be used alone, or may be used as a mixture of two or more types of curable monomers, a mixture of two or more types of curable oligomers, or a mixture of one or two or more types of curable monomers and one or two or more types of curable oligomers.

The ionizing radiation-curable ink for forming the hardcoat layer preferably contains 40 mass% or greater, 45 mass% or greater, or 50 mass% or greater, of polyfunctional (di- or higher functional) monomer relative to the total amount of the curable monomer(s) and the curable oligomer(s) from the perspective of achieving scratch resistance. The upper limit of the polyfunctional monomer content is not limited to a particular amount and, for example, may be 90 mass% or less, 85 mass% or less, 80 mass% or less, 75 mass% or less, or 70 mass% or less.

The ionizing radiation-curable ink may contain, for example, 25 mass% or less, or 20 mass% or less of the curable oligomer relative to the total amount of the curable monomer(s) and the curable oligomer(s). The lower limit of the curable oligomer content is not limited to a particular amount and, for example, may be greater than 0 mass%, or 1 mass% or greater.

The ionizing radiation-curable ink may contain, for example, 50 mass% or less, 45 mass% or less, or 40 mass% or less of the monofunctional monomer relative to the total amount of the curable monomer(s) and the curable oligomer(s). The lower limit of the monofunctional monomer content is not limited to a particular amount and, for example, may be 1 mass% or greater, 5 mass% or greater, 10 mass% or greater, 15 mass% or greater, or 20 mass% or greater.

In some embodiments, as a resin, included are: pentaerythritol tri(meth)acrylate or pentaerythritol tetra(meth)acrylate (e.g., available as trade names "SR444" and "SR295" from Sartomer Company, Exton, PA), dipentaerythritol penta(meth)acrylate (e.g., available as a trade name "SR399" from Sartomer Company, Exton, PA), pentaerythritol tri(meth)acrylate isophorone diisocyanate (e.g., available as a trade name "UX-5000" from Nippon Kayaku Co., Ltd. (Tokyo, Japan)), urethane (meth)acrylate (e.g., available as trade names "UV1700B" and "UB6300B") from The Nippon Synthetic Chemical Industry Co., Ltd. (Osaka, Japan), trimethylhydroxyl diisocyanate/hydroxyethyl (meth)acrylate (e.g., available as a trade name "Ebecryl 4858" from Daicel-Cytec Company Ltd (Tokyo, Japan)), polyethylene oxide (PEO) modified bis-A di(meth)acrylate (e.g., available as a trade name "R551" from Nippon Kayaku Co., Ltd., (Tokyo, Japan)), PEO modified bis-A epoxy (meth)acrylate (e.g., available as a trade name "3002M" from Kyoeisha Chemical Co., Ltd. (Osaka, Japan)), a silane-based UV curable resin (e.g., available as a trade name "SK501M" from Nagase ChemteX Corporation. (Osaka, Japan)), 2-phenoxyethyl (meth)acrylate (e.g., available as a trade name "SR340" from Sartomer), and a resin polymerized using a mixture of these.

As necessary, the hardcoat layer may be further cured by another curable monomer or curable oligomer. Typical examples of the curable monomer or curable oligomer include:
(a) compounds having two (meth)acryl groups, such as 1,3-butylene glycol di(meth)acrylate, 1,4-butanediol di(meth)acrylate, 1,6-hexanediol di(meth)acrylate, 1,6-hexanediol monoacrylate monomethacrylate, ethylene glycol di(meth)acrylate, alkoxylated aliphatic di(meth)acrylate, alkoxylated cyclohexanedimethanol di(meth)acrylate, alkoxylated hexanediol di(meth)acrylate, alkoxylated neopentyl glycol di(meth)acrylate, caprolactone-modified neopentyl glycol hydroxypivalate di(meth)acrylate, caprolactone-modified neopentyl glycol hydroxypivalate di(meth)acrylate, cyclohexanedimethanol di(meth)acrylate, diethylene glycol di(meth)acrylate, dipropylene glycol di(meth)acrylate, ethoxylated (10) bisphenol A di(meth)acrylate, ethoxylated (3) bisphenol A di(meth)acrylate, ethoxylated (30) bisphenol A di(meth)acrylate, ethoxylated (4) bisphenol A di(meth)acrylate, hydroxypivalaldehyde-modified trimethylolpropane di(meth)acrylate, neopentyl glycol di(meth)acrylate, polyethylene glycol (200) di(meth)acrylate, polyethylene glycol (400) di(meth)acrylate, polyethylene glycol (600) di(meth)acrylate, propoxylated neopentyl glycol di(meth)acrylate, tetraethylene glycol di(meth)acrylate, tricyclodecane dimethanol di(meth)acrylate, triethylene glycol di(meth)acrylate, and tripropylene glycol di(meth)acrylate;
(b) compounds having three (meth)acryl groups, such as glycerol tri(meth)acrylate, trimethylolpropane tri(meth)acrylate, ethoxylated tri(meth)acrylate (e.g., ethoxylated (3) trimethylolpropane tri(meth)acrylate, ethoxylated (6) trimethylolpropane tri(meth)acrylate, ethoxylated (9) trimethylolpropane tri(meth)acrylate, and ethoxylated (20) trimethylolpropane tri(meth)acrylate), pentaerythritol tri(meth)acrylate, propoxylated tri(meth)acrylate (e.g., propoxylated (3) glyceryl tri(meth)acrylate, propoxylated (5.5) glyceryl tri(meth)acrylate, propoxylated (3) trimethylolpropane tri(meth)acrylate, and propoxylated (6) trimethylolpropane tri(meth)acrylate), trimethylolpropane tri(meth)acrylate, and tris(2-hydroxyethyl)isocyanurate tri(meth)acrylate;
(c) compounds having four (meth)acryl groups, such as ditrimethylolpropane tetra(meth)acrylate, dipentaerythritol penta(meth)acrylate, ethoxylated (4) pentaerythritol tri(meth)acrylate, and caprolactone-modified dipentaerythritol hexa(meth)acrylate; and
(d) for example, oligomer (meth)acryl compounds, such as urethane (meth)acrylate, polyester (meth)acrylate, and epoxy (meth)acrylate; polyacrylamide analogs; and polyfunctional (meth)acrylic monomers and polyfunctional (meth)acrylic oligomers selected from the group consisting of combinations of these. Among these, from the perspective of scratch resistance, 1,6-hexanediol di(meth)acrylate is preferred. These other curable monomers and curable oligomers may be used alone, or a plurality thereof may be used in combination.

These compounds are commercially available, and at least some are available from Sartomer, UCB Chemicals Corporation (Smyrna, GA), Aldrich Chemical Company, Milwaukee, WI, and the like. Examples of other useful (meth)acrylates include hydantoin moiety-containing poly (meth)acrylates as reported, for example, in the US 4,262,072 A.

From the perspective of scratch resistance, preferred curable monomers or curable oligomers contain, for example, at least three (meth)acryl groups. Examples of preferred commercially available curable monomers or curable oligomers include trimethylolpropane tri(meth)acrylate (trade name "SR351"), pentaerythritol tri(meth)acrylate or pentaerythritol tetra(meth)acrylate (trade names "SR444" and "SR295"), and dipentaerythritol penta(meth)acrylate (trade name "SR399") available from Sartomer.

The curable monomers or curable oligomers described above may be mixed with a monofunctional monomer for use. As such a monofunctional monomer, for example, a monofunctional (meth)acrylate monomer may be used. Examples of such a monofunctional (meth)acrylate monomer include alkyl (meth)acrylate, in which the alkyl group is linear or branched, having from 1 to 22 carbon atoms (preferably from 1 to 18 carbon atoms, and even more preferably from 1 to 12 carbon atoms), isobornyl (meth)acrylate, ethoxyethoxyethyl (meth)acrylate, phenoxyethyl (meth)acrylate, cyclic trimethylolpropane formal (meth)acrylate, and tetrahydrofurfuryl (meth)acrylate. These binders may be used alone or in combination. Among these, from the perspective of scratch resistance, isobornyl (meth)acrylate and ethoxyethoxyethyl (meth)acrylate are preferred.

Examples of the photoinitiator used in the ionizing radiation-curable ink include acetophenones, such as diethoxyacetophenone, 2-hydroxy-2-methyl-1-phenylpropan-1-one, benzil dimethylketal, 4-(2-hydroxyethoxy)phenyl-(2-hydroxy-2-propyl)ketone, 1-hydroxycyclohexylphenyl ketone, 2-methyl-2-morpholino(4-thiomethylphenyl)propan-1-one, 2-benzyl-2-dimethylamino-1-(4-morpholinophenyl)butanone, and 2-hydroxy-2-methyl-1-[4-(1-methylvinyl)phenyl]propanone oligomers; benzoins, such as benzoin, benzoin methyl ether, benzoin ethyl ether, benzoin isopropyl ether, and benzoin isobutyl ether; benzophenones, such as benzophenone, methyl o-benzoylbenzoate, 4-phenylbenzophenone, 4-benzoyl-4'-methyl-diphenyl sulfide, 3,3',4,4'-tetra(t-butylperoxycarbonyl)benzophenone, 2,4,6-trimethylbenzophenone, 4-benzoyl-N,N-dimethyl-N-[2-(1-oxo-2-propenyloxy)ethyl]benzene methanaminium bromide, and (4-benzoylbenzyl)trimethylammonium chloride; thioxanthones, such as 2-isopropylthioxanthone, 4-isopropylthioxanthone, 2,4-diethylthioxanthone, 2,4-dichlorothioxanthone, 1-chloro-4-propoxythioxanthone, and 2-(3-dimethylamino-2-hydroxy)-3,4-dimethyl-9H-thioxanthon-9-one methochloride; and acylphosphone oxides, such as 2,4,6-trimethylbenzoyl-diphenylphosphine oxide, bis(2,6-dimethoxybenzoyl)-2,4,4-trimethyl-pentylphosphine oxide, and bis(2,4,6-trimethylbenzoyl)-phenylphosphine oxide. These photopolymerization initiators may be used alone or in combination.

The hardcoat layer according to the present disclosure may include, as an optional component, for example, a filler, a reinforcing material, an antioxidant, a curing accelerator, a UV absorber, a light stabilizer, a thermal stabilizer, a dispersant, a plasticizer, a flow improving agent, a surfactant, a silane coupling agent, a catalyst, a pigment, and a dye, within the range that does not inhibit the effects of the present disclosure.

When a filler is blended in the hardcoat layer, scratch resistance can be further enhanced. As a filler, inorganic particles are preferred, and inorganic nanoparticles are more preferred. Examples of the inorganic particles include inorganic oxides of alumina, tin oxide, antimony oxide, silica, zirconia, titania, and ferrite, mixtures of these, and mixed oxides of these; metal vanadate, metal tungstate, metal phosphate, metal nitrate, metal sulfate, and metal carbide. These binders may be used alone or in combination. Among these, silica particles are preferred, and nanosilica particles are particularly preferred.

As the nanoparticles of inorganic oxide, inorganic oxide sol may be used. For example, in the case of nanosilica particles, silica sol obtained by using water glass (sodium silicate solution) as a starting material may be used. The silica sol obtained by using water glass has a significantly narrow particle size distribution depending on the production conditions, and thus use of such silica sol can precisely control a filling proportion of the nanoparticles in the hardcoat layer and can provide a hardcoat layer having desired performances.

A particle diameter (average particle diameter) of the nanoparticles is not limited to a particular diameter and, for example, may be 2 nm or greater, 5 nm or greater, or 10 nm or greater, and less than 1000 nm, 800 nm or less, 600 nm or less, or 400 nm or less. In the case where the nanoparticles are contained in the hard-coating liquid, the average particle diameter can be measured by using a dynamic light scattering method. In the case where the nanoparticles are contained in the hardcoat layer, the average particle diameter can be determined by subjecting a cross-section of a hardcoat layer to measurement by using a scanning electron microscope (SEM). In the case where a scanning electron microscope is used, the average particle diameter may be defined as an average particle diameter of 10 or more particles.

The amount of the filler blended in the hardcoat layer is not limited to a particular amount and, for example, may be 10 mass% or greater, 20 mass% or greater, or 30 mass% or greater, and 95 mass% or less, 90 mass% or less, or 85 mass% or less, relative to the total mass of the hardcoat layer. Alternatively, the volume of the filler blended in the hardcoat layer may be 10 vol% or greater, 20 vol% or greater, or 30 vol% or greater, and 95 vol% or less, 90 vol% or less, or 85 vol% or less, relative to the total volume of the hardcoat layer.

The decorative film according to the present disclosure has a flexible resin layer. The flexible resin layer is typically a layer softer than the hardcoat layer described above, the decorative film having the flexible resin layer can achieve an elongation percentage of 10% or greater. Although the principle is not clear, unexpectedly, when a flexible resin layer is applied to a substrate film, the elongation percentage can be enhanced compared to a configuration including no flexible resin layer. Furthermore, because the independent dot-patterned hardcoat layer described above is arranged on the flexible resin layer, force applied to dots can be absorbed and mitigated by the flexible resin layer. Therefore, the decorative film according to the present disclosure can further enhance scratch resistance compared to a configuration in which an independent dot-patterned hardcoat layer is not arranged on a flexible resin layer.

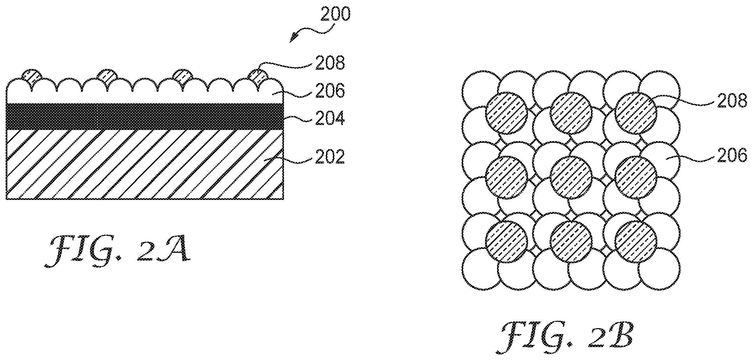

The thickness of the flexible resin layer is not limited to a particular thickness and, for example, may be 5 µm or greater, 10 µm or greater, or 15 µm or greater. From the perspective of absorbing and mitigating force applied to the dots, the thickness of the flexible resin layer is preferably 20 µm or greater, and more preferably 30 µm or greater. The upper limit of the thickness is not limited to a particular thickness and, for example, may be 200 µm or less, 150 µm or less, or 100 µm or less. Note that the thickness in the case where the flexible resin layer is a discontinuously printed layer described below as illustrated in FIGS. 2A and 2B may be defined as a length of a perpendicular line extended from a top of the protrusion to another layer adjacent below (e.g., decorative layer 204 in FIG. 2B).

The flexible resin layer may be transparent, translucent, or opaque, and is a discontinuously printed layer (may be referred to as "flexible discontinuously printed resin layer" or simply "discontinuous layer") as illustrated in FIGS. 2A and 2B. Since the flexible resin layer is a discontinuously printed layer, matte performance can be imparted in addition to the scratch resistance and the elongation properties.

When the flexible resin layer is a discontinuously printed layer, a protruded and recessed shape as a result of the discontinuous printing is provided on the resin layer. For example, the discontinuously printed layer may have the protruded and recessed shape in the entire thickness direction of the layer or may have the protruded and recessed shape in a part in the thickness direction including the layer surface. The latter protruded and recessed shape can be formed by, for example, forming a flexible continuously printed resin layer, and then separately printing a discontinuous flexible resin layer on this resin layer to form the protruded and recessed shape.

The protruded and recessed shape of the flexible discontinuously printed resin layer is not limited to a particular shape. For example, in the case where the decorative film is viewed from above as illustrated in FIG. 2B, the shape may be substantially polygonal (e.g., substantially triangular, substantially square, substantially pentagonal, or substantially hexagonal) or substantially spherical or may be in an irregular shape. The protruded and recessed shape may include one type of shape as illustrated in FIGS. 2A and 2B or may include a combination of multiple types of shapes. The upper portion shape of the protrusion is also not limited to a particular shape. For example, the upper portion shape may have a flat surface or may have a curved surface as illustrated in FIG. 2A; however, from the perspectives of matte and light scattering properties, the upper portion shape preferably has a curved surface.

The pattern shape of the protrusions and recesses in the discontinuously printed layer is not limited to a particular shape. For example, the pattern shape may be a regular pattern shape as illustrated in FIG. 2B or an irregular pattern shape. When the protruded and recessed pattern is an independent dot pattern having a large spacing between dots, like the hardcoat layer described above, effect of glossiness of the base (e.g., decorative layer or substrate film) is easily exhibited, and thus matte performance may decrease. Therefore, the protrusions in the protruded and recessed pattern are preferably relatively close. Because the distance between the protrusions affects the 60 degree glossiness, the distance between the protrusions can be indirectly specified by the value of the 60 degree glossiness.

The protruded and recessed pattern can be formed by, for example, embossing or a known printing method, such as inkjet printing, screen printing, flexographic printing, or gravure printing; however, for example, from the perspectives of productivity and matte performance, the protruded and recessed pattern is preferably formed by an inkjet printing method. The protruded and recessed pattern of the discontinuously printed layer formed by using the inkjet printing method can form a joined dot pattern as illustrated in FIG. 2B, and matte performance can be further enhanced. Although the principle is not clear, when an independent dot-patterned hardcoat layer is arranged on a discontinuously printed layer, the matte performance can be further enhanced. For example, in the case where the area-equivalent circular diameter of the dot in the joined dot pattern is less than the area-equivalent circular diameter of the independent dot pattern, or in the case where the minimum distance and the maximum distance between dots in the joined dot pattern is smaller than the minimum distance and the maximum distance between dots in the independent dot pattern, the matte performance can be even further enhanced.

For example, if the joined dot pattern of the hardcoat layer is employed instead of the independent dot pattern, it is possible to exhibit matte performance in addition to scratch resistance. However, when such a structure is employed, because dots are joined, cracking may occur upon stretching the decorative film, and thus the appearance of the decorative film may be impaired. The decorative film having the configuration according to the present disclosure having the independent dot-patterned hardcoat layer and the flexible discontinuously printed resin layer can reduce or prevent occurrence of such cracking and can exhibit matte performance in addition to scratch resistance.

The resin contained in the flexible resin layer is not limited to a particular resin, and examples of the resin include (meth)acrylic resins, urethane-based resins, epoxy-based resins, phenol-based resins, and polyvinyl alcohol. Among these, from the perspectives of elongation properties and adhesion to the hardcoat layer, a (meth)acrylic resin is preferred.

The proportion of the resin in the flexible resin layer is not limited to a particular proportion and, for example, may be 50 mass% or greater, 60 mass% or greater, or 70 mass% or greater, and 100 mass% or less, or less than 100 mass%, relative to the total mass of the flexible resin layer.

From the perspective of productivity, the flexible resin layer preferably contains a cured product of an ionizing radiation-curable ink. The ionizing radiation-curable ink contains a curable monomer, such as a monofunctional and/or polyfunctional (meth)acrylate monomer, or a curable oligomer, and may optionally contain a photopolymerization initiator and an organic solvent. In the case where an electron beam irradiation is employed, no photopolymerization initiator may be used.

As the curable monomer or curable oligomer, a known curable monomer or curable oligomer may be used. These may be used alone, or may be used as a mixture of two or more types of curable monomers, a mixture of two or more types of curable oligomers, or a mixture of one or two or more types of curable monomers and one or two or more types of curable oligomers.

The ionizing radiation-curable ink for forming the flexible resin layer preferably contains 40 mass% or greater, 45 mass% or greater, or 50 mass% or greater, of monofunctional monomer relative to the total amount of the curable monomer(s) and the curable oligomer(s) from the perspectives of achieving flexibility and elongation properties. The upper limit of the monofunctional monomer content is not limited to a particular amount and, for example, may be 90 mass% or less, 85 mass% or less, 80 mass% or less, 75 mass% or less, or 70 mass% or less.

The ionizing radiation-curable ink may contain 30 mass% or less, 25 mass% or less, or 20 mass% or less, of curable oligomer relative to the total amount of the curable monomer(s) and the curable oligomer(s). The lower limit of the curable oligomer content is not limited to a particular amount and, for example, may be greater than 0 mass%, 5 mass% or greater, or 10 mass% or greater.

The ionizing radiation-curable ink may contain 10 mass% or less, 5 mass% or less, or 3 mass% or less of polyfunctional (bifunctional, or higher functionality) monomer relative to the total amount of the curable monomer(s) and the curable oligomer(s). The lower limit of the polyfunctional monomer content is not limited to a particular amount, and, for example, may be greater than 0 mass%, 0.5 mass% or greater, or 0.7 mass% or greater.

In some embodiments, as a monofunctional monomer, for example, a monofunctional (meth)acrylate monomer may be used. Examples of such a monofunctional (meth)acrylate monomer include alkyl (meth)acrylate, in which the alkyl group is linear or branched and which has from 1 to 22 carbon atoms (preferably from 1 to 18 carbon atoms, and even more preferably from 1 to 12 carbon atoms), isobornyl (meth)acrylate, ethoxyethoxyethyl (meth)acrylate, phenoxyethyl (meth)acrylate, cyclic trimethylolpropane formal (meth)acrylate, and tetrahydrofurfuryl (meth)acrylate. These binders may be used alone or in combination. Among these, from the perspective of elongation properties, isobornyl (meth)acrylate and ethoxyethoxyethyl (meth)acrylate are preferred.

In some embodiments, as a polyfunctional monomer and a curable oligomer, functional curable monomers with bifunctionality or higher functionality and curable oligomers with bifunctionality of higher functionality used in the hardcoat layer described above may be appropriately employed. Among these, from the perspective of elongation properties of the flexible resin layer, as a polyfunctional monomer, tricyclodecane dimethanol di(meth)acrylate is preferred, and as the curable oligomer, oligomer (meth)acryl compounds, such as urethane (meth)acrylate, polyester (meh)acrylate, and epoxy (meth)acrylate, are preferred.

As a photopolymerization initiator used in the ionizing radiation-curable ink, the same photopolymerization initiators used for the hardcoat layer described above may be used.

The flexible resin layer according to the present disclosure may include, as an optional component, for example, a filler, a reinforcing material, an antioxidant, a curing accelerator, a UV absorber, a light stabilizer, a thermal stabilizer, a dispersant, a plasticizer, a flow improving agent, a surfactant, a leveling agent, a silane coupling agent, a catalyst, a pigment, and a dye, within the range that does not inhibit the effects of the present disclosure.

The decorative film according to the present disclosure has a substrate film. The substrate film is not limited to a particular substrate film, but a substrate film having an elongation percentage of 10% or greater, 15% or greater, or 20% or greater is preferred. When such a substrate film is used, the elongation percentage can be further enhanced in the case where the substrate film is used together with the flexible resin layer. The upper limit of the elongation percentage of the substrate film is not limited to a particular percentage but may be specified to be, for example, 300% or less, 250% or less, or 200% or less.

Examples of the material for the substrate film include polyvinyl chloride-based resins, polyurethane-based resins, polyolefin-based resins, polyester-based resins, polycarbonate-based resins, polyimide-based resins, polyamide-based resins, (meth)acrylic resins, and fluorine-based resins. These binders may be used alone or in combination.

The thickness of the substrate film according to the present disclosure is not limited to a particular thickness and, for example, may be 50 µm or greater, 100 µm or greater, or 150 µm or greater. The upper limit is not limited to a particular thickness; however, from the perspectives of followability and production costs, for example, the upper limit may be 1 mm or less, 700 µm or less, 500 µm or less, or 300 µm or less.

The substrate film according to the present disclosure may include, as an optional component, for example, a filler, a reinforcing material, an antioxidant, a UV absorber, a light stabilizer, a thermal stabilizer, a dispersant, a plasticizer, a flow improving agent, a surfactant, a leveling agent, a silane coupling agent, a catalyst, a pigment, and a dye, within the range that does not inhibit the effects of the present disclosure.

The decorative film of the present disclosure is not limited to the following, but depending on a condition of its use, a decorative property and the like, may further include at least one selected from the group consisting of, for example, a decorative layer, a brightening layer, a bonding layer, an adhesive layer, and a release liner.

In the decorative film according to the present disclosure, for example, a decorative layer may be arranged in between the substrate film and the flexible resin layer or in between the substrate film and the adhesive layer. The decorative layer may be applied to an entire surface or a portion of the substrate film, directly or with a bonding layer interposed between the decorative layer and the substrate film.

Examples of the decorative layer include, but are not limited to: a color layer that exhibits a paint color, for example a light color such as white and yellow, or a dark color such as red, brown, green, blue, gray, and black; a pattern layer that imparts to an article a pattern, a logo, a design or the like such as a wood grain tone, a stone grain tone, a geometric pattern, and a leather pattern; a relief (embossed carving pattern) layer provided with an protruded and recessed shape on a surface; and combinations thereof.

As a material of the color layer, for example, a material in which a pigment such as an inorganic pigment such as carbon black, yellow lead, yellow iron oxide, Bengala, or red iron oxide; a phthalocyanine pigment such as phthalocyanine blue or phthalocyanine green; and an organic pigment such as an azo lake pigment, an indigo pigment, a perinone pigment, a perylene pigment, a quinophthalone pigment, a dioxazine pigment, and a quinacridone pigment such as quinacridone red is dispersed in a binder resin such as a (meth)acrylic resin or a polyurethane-based resin may be used. However, the material of the color layer is not limited thereto.

Such a material may be used to form the color layer by, for example, a coating method such as gravure coating, roll coating, die coating, bar coating, and knife coating, or a printing method such as inkjet printing.

As a pattern layer, a pattern layer obtained by, for example, directly applying a pattern, a logo, a design, or other such patterns to the substrate film or the like by using a printing method such as gravure direct printing, gravure offset printing, inkjet printing, laser printing, or screen printing may be adopted, or a film, a sheet, or the like having a pattern, a logo, a design, or the like formed by coating such as gravure coating, roll coating, die coating, bar coating, and knife coating, or by punching, etching, or the like may also be used. However, the pattern layer is not limited thereto. For example, a material similar to the material used in the color layer may be used as the material of the pattern layer.

As a relief layer, a thermoplastic resin film having a concavo-convex shape on a surface obtained by a conventionally known method such as embossing, scratching, laser machining, dry etching, or hot pressing may be used. The relief layer can also be formed by coating the release liner having a protruded and recessed shape with a thermosetting or radiation curable resin such as a curable (meth)acrylic resin, curing by heating or radiation irradiation, and removing the release liner.

The thermoplastic resin, the thermosetting resin, and the radiation curable resin used in the relief layer are not limited to a particular resin, and for example, a fluororesin, PET, PEN, and other such polyester resins, a (meth)acrylic resin, polyethylene, polypropylene, and other such polyolefin resins, a thermoplastic elastomer, a polycarbonate, a polyamide, an ABS resin, an acrylonitrile-styrene resin, polystyrene, vinyl chloride, and polyurethane may be used. The relief layer may include at least one of the pigments used in the color layer.

The decorative layer of the present disclosure may include, as an optional component, for example, a filler, a reinforcing material, an antioxidant, a UV absorber, a light stabilizer, a thermal stabilizer, a dispersant, a plasticizer, a flow improving agent, a surfactant, a leveling agent, a silane coupling agent, and a catalyst within the range that does not inhibit the effects of the present disclosure and decorative properties.

The thickness of the decorative layer can be appropriately adjusted depending on, for example, required decorative properties and concealing properties and is not limited to a particular thickness, and may be, for example, 1 µm or greater, 3 µm or greater, or 5 µm or greater, and may be 50 µm or less, 40 µm or less, 30 µm or less, 20 µm or less, or 15 µm or less.

The brightening layer is not limited to the following, but may be a layer that includes a metal selected from aluminum, nickel, gold, silver, copper, platinum, chromium, iron, tin, indium, titanium, lead, zinc, and germanium, or an alloy or a compound thereof, and that is formed by vacuum deposition, sputtering, ion plating, plating, or the like on an entire surface or a part of the substrate film or the decorative layer. The thickness of the brightening layer may be selected arbitrarily according to the required decorative property, brightness and the like.

A bonding layer (may be referred to as a "primer layer" or the like) may be used to bond the layers constituting the decorative film. As a bonding layer, for example, a commonly used (meth)acrylic-based, polyolefin-based, polyurethane-based, polyester-based, or rubber-based solvent type, emulsion type, pressure sensitive type, heat sensitive type, thermosetting type, or UV curing type adhesive may be used. The bonding layer may be applied by a known coating method or the like.

The thickness of the bonding layer may be, for example, 0.05 µm or greater, 0.5 µm or greater, or 5 µm or greater, and may be 100 µm or less, 50 µm or less, 20 µm or less, or 10 µm or less.

The decorative film may further have an adhesive layer to adhere the decorative film to an adherend. As a material of the adhesive layer, materials that are the same as that of the bonding layer may be used. The adhesive layer may be applied to an adherend instead of the decorative film.

The thickness of the adhesive layer may be, but not limited to, for example, 5 µm or greater, 10 µm or greater, or 20 µm or greater, and may be 200 µm or less, 100 µm or less, or 80 µm or less.

The bonding layer and the adhesive layer according to the present disclosure may include, as an optional component, for example, an antioxidant, a UV absorber, a light stabilizer, a thermal stabilizer, a tackifier, a dispersant, a plasticizer, a flow improving agent, a surfactant, a leveling agent, a silane coupling agent, a catalyst, a pigment, and a dye, within the range that does not inhibit the effects of the present disclosure and decorative properties.

Any suitable release liner may be used to protect the adhesive layer. Examples of a typical release liner include those prepared from paper (e.g., kraft paper), and from polymeric materials (e.g., polyolefin such as polyethylene or polypropylene, ethylene vinyl acetate, polyurethane, polyethylene terephthalate, and other such polyester). On the release liner, a layer of a release agent such as a silicone-containing material or a fluorocarbon-containing material may be applied as necessary.

The thickness of the release liner may be, for example, 5 µm or greater, 15 µm or greater, or 25 µm or greater, and may be 300 µm or less, 200 µm or less, or 150 µm or less.

The thickness of the decorative film according to the present disclosure may be, but not limited to, for example, 120 µm or greater, 150 µm or greater, 200 µm or greater, or 250 µm or greater, and may be 2 mm or less, 1 mm or less, or 500 µm or less. Note that the thickness of the decorative film may be defined as a length of a perpendicular line extended from a top of the independent dot-patterned hardcoat layer of the decorative film to a base of the decorative film (however, in the case where a release liner is present, the thickness of the release liner is excluded).

By setting the thickness of the decorative film to be within the ranges described above, the decorative film can sufficiently follow even an adherend having a complex shape such as a curved surface shape, and excellent appearance can be provided.

The decorative film according to the present disclosure can exhibit the following performances, for example.

The decorative film according to the present disclosure can exhibit scratch resistance. The scratch resistance can be evaluated by a pencil hardness test described in the examples described below.

The decorative film according to the present disclosure can have a pencil hardness of 3B or higher or 2B or higher. The upper limit of the pencil hardness is not limited to a particular hardness and, for example, can be specified to be 6H or lower, 5H or lower, or 4H or lower.

The scratch resistance of the decorative film according to the present disclosure can be also evaluated by wear resistance determined by Taber abrasion test described in the examples described below.

The decorative film according to the present disclosure can have wear resistance of 500 times or greater, 750 times or greater, or 1000 times or greater. The upper limit of the wear resistance is not limited to a particular quantity and, for example, can be specified to be 10000 times or less, 8000 times or less, or 6000 times or less.

The decorative film of the present disclosure can exhibit excellent elongation properties. The elongation properties can be evaluated by an elongation percentage (elongation at break) determined by elongation test described in the examples described below.

The decorative film according to the present invention has an elongation percentage of 10% or greater, 15% or greater, or 20% or greater. The upper limit of the elongation percentage is not limited to a particular percentage but can be specified to be, for example, 200% or less, 175% or less, or 150% or less.

The decorative film according to the present invention can exhibit matte performance (matting performance) due to the presence of protrusions and recesses on the flexible resin layer. The matte performance can be evaluated by 60 degree glossiness test described in the examples described below.

The decorative film according to the present disclosure having the discontinuously printed layer can have a 60 degree glossiness of 20 or less, 15 or less, 10 or less, 7.5 or less, or 5.0 or less. The lower limit of the 60 degree glossiness is not limited to a particular quantity and, for example, can be defined as 1.0 or greater, 1.5 or greater, or 2.0 or greater.

The decorative film according to the present disclosure has elongation properties and thus, for example, can follow a curved surface member and a bending member such as a pillar and also has scratch resistance. Therefore, the decorative film according to the present disclosure can be used for interior and/or exterior that requires shape followability, such as interior of various vehicles or buildings (e.g., instrument panels of cars, wallpapers in buildings), and exterior of electrical appliances, such as personal computers, smartphones, cellular phones, refrigerators, and air conditioners, stationery, furniture, and desks. The decorative film having the flexible discontinuously printed resin layer also has matte performance and thus can be suitably used for wallpapers.

An example of a method for manufacturing the decorative film of the present invention will be described illustratively with reference to FIGS. 2A to 2B, but the method for manufacturing the decorative film is not limited thereto. An alternatively configured decorative film, not forming part of the present invention, is illustrated in FIGS. 1A to 1B.

For the decorative films having configurations of FIGS. 1A and 1B and FIGS. 2A and 2B, for example, on a substrate film (102, 202), a decorative layer (104, 204) is applied by using a known printing method, and, as necessary, drying and/or curing process is further applied. Then, on the obtained decorative layer (104, 204), a first ionizing radiation-curable ink is applied by using an inkjet printer and irradiated with ionizing radiation to cure the ink, to form a flexible resin layer (106, 206). On this flexible resin layer (106, 206), a second ionizing radiation-curable ink is applied by using an inkjet printer and irradiated with ionizing radiation to cure the ink, to form an independent dot-patterned hardcoat layer (108, 208), and thus a decorative film (110, 210) can be obtained. The application of the ink by using inkjet printer(s) may be performed once or two or more times.

### Examples

Specific embodiments of the present disclosure will be exemplified in the following examples, but the present invention is not limited to these embodiments. All parts and percentages are based on mass unless otherwise specified.

Products and the like used in the examples are shown in Table 1 below.

**[Table 1]**

| Compound name, product name or abbreviation | Description | Source of supply |
|---|---|---|
| IBOA | Isobornyl acrylate | Osaka Organic Chemical Industry Ltd. (Osaka-shi, Osaka, Japan) |
| HDDA | 1,6-hexanediol diacrylate | Osaka Organic Chemical Industry Ltd. (Osaka-shi, Osaka, Japan) |
| PETTA | Pentaerythritol tetraacrylate | Sartomer (Pennsylvania, USA) |
| EEEA | 2-ethoxyethoxy ethyl acrylate | Osaka Organic Chemical Industry Ltd. (Osaka-shi, Osaka, Japan) |
| DCP | Tricyclodecanedimethanol diacrylate | Shin Nakamura Chemical Co., Ltd. (Wakayama-shi, Wakayama, Japan) |
| CN981 | Urethane acrylate oligomer | Sartomer (Pennsylvania, USA) |
| BK104-34 | Filler: nanosilica particle-dispersed monomer mixture (IBOA:HDDA:PETTA = 2:4:4) | 3M Japan Ltd. (Shinagawa-ku, Tokyo, Japan) |
| ADDITOL LED 01 | Curing accelerator: mercapto-modified polyester acrylate resin | Daicel-Allnex Ltd. (Chuo-ku, Tokyo, Japan) |
| TPO | Photopolymerization initiator: 2,4,6-trimethybenzoyl diphenylphosphine oxide | CHITEC (Taipei, Taiwan) |
| Omnirad (trademark) 184 | Photopolymerization initiator: 1-hydroxycyclohexylphenyl ketone | IGM Resins B.V. (Waalwijk, Netherlands) |
| Lignostab (trademark) 1198 | Light stabilizer | BASF Japan Ltd. (Minato-ku, Tokyo, Japan) |
| Pyrogallol | Polymerization inhibitor | Wako Pure Chemical Industries, Ltd. (Chuo-ku, Osaka, Japan) |
| RUVA-93 | UV absorber: 2-[3-(2H-benzotriazol-2-yl)-4-hydroxyphenyl]ethyl methacrylate | Otsuka Chemical Co., Ltd. (Chuo-ku, Osaka, Japan) |
| TEGO (trademark) Flow 425 | Flow improving agent: polyether siloxane copolymer | Evonik Japan Co., Ltd. (Shinjuku-ku, Tokyo, Japan) |
| LUS200 ink | UV-curable inkjet ink | 3M Japan Ltd. (Shinagawa-ku, Tokyo, Japan) |
| 3M (trademark) Scotchcal (trademark) graphic film IJ180Cv3-10XR | Polyvinyl chloride film having acrylic pressure-sensitive adhesive layer | 3M Japan Ltd. (Shinagawa-ku, Tokyo, Japan) |

The materials indicated in Table 1 were mixed at blending ratios indicated in Table 2, and transparent inks to make the flexible resin layer and the hardcoat layer were made. Note that all numerical values in Table 2 are in a unit of part by mass.

**[Table 2]**

| | Transparent ink for flexible resin | Transparent ink for hardcoat | |
|---|---|---|---|
| | F-1 | H-1 | H-2 |
| IBOA | 56.45 | 26.03 | 10.58 |
| HDDA | - | 27.42 | 37.42 |
| PETTA | - | 15.00 | 15.00 |
| EEEA | 15.00 | - | - |
| DCP | 1.00 | - | - |
| CN981 | 15.00 | - | - |
| BK104-34 | - | 25.00 | 25.00 |
| ADDITOL LED 01 | - | - | 5.00 |
| TPO | 1.00 | 1.00 | - |
| Omnirad (trademark) 184 | 10.00 | 10.00 | 6.00 |
| Lignostab (trademark) 1198 | 0.05 | 0.05 | - |
| Pyrogallol | - | - | 0.10 |
| RUVA-93 | 1.00 | - | - |
| TEGO (trademark) Flow 425 | 0.90 | 0.90 | 0.90 |
| Total | 100.40 | 105.40 | 100.00 |

In Examples 1 and 2 and Comparative Examples 1 to 3, scratch resistance and elongation properties of the decorative films were evaluated. It is noted that examples 1 and 2 do not form part of the claimed invention.

### Example 1

Using an inkjet printer (inkjet head KM1024i LMHB, 720 × 720 dpi, Konica Minolta, Inc., Chiyoda-ku, Tokyo, Japan) and LUS200 ink, on a substrate film having a thickness of approximately 90 µm (3M (trade name) Scotchcal (trade name) graphic film IJ180Cv3-10XR), 6 pass printing of a decorative layer formed from CMYK color bar was performed. Using a metal halide lamp, ultraviolet irradiation was performed at a dose of approximately 90 mJ/cm² per 1 pass, and a decorative layer having a thickness of approximately 10 µm was prepared. On the obtained decorative layer, 6 pass printing of a flexible continuously printed resin layer was performed by using an inkjet printer and the transparent ink for a flexible resin (F1). Using a metal halide lamp, ultraviolet irradiation was performed at a dose of approximately 410 mJ/cm² per 1 pass to prepare a flexible continuously printed resin layer having a thickness of approximately 50 µm. Next, on the flexible continuously printed resin layer, 6 pass printing of an independent dot-patterned hardcoat layer was performed by using an inkjet printer and the transparent ink for a hardcoat (H1). Using a metal halide lamp, ultraviolet irradiation was performed at a dose of approximately 410 mJ/cm² per 1 pass, and a decorative film was obtained. Note that the area-equivalent circular diameter of dot was approximately 205 µm, the center-to-center distance of dots was approximately 566 µm, and the maximum height of dot was approximately 61 µm.

### Example 2

A decorative film of Example 2 was prepared in the same manner as in Example 1 except for forming an independent dot-patterned hardcoat layer in a manner that the area-equivalent circular diameter of dot was approximately 300 µm, the center-to-center distance of dots was approximately 500 µm, and the maximum height of dot was approximately 30 µm.

### Comparative Example 1

A decorative film of Comparative Example 1 was prepared in the same manner as in Example 1 except that the independent dot-patterned hardcoat layer was not formed.

### Comparative Example 2

A decorative layer was prepared in the same manner as in Example 1, and, on this decorative layer, 6 pass printing of a hardcoat layer was performed by using an inkjet printer and the transparent ink for a hardcoat (H1). Using a metal halide lamp, ultraviolet irradiation was performed at a dose of approximately 410 mJ/cm² per 1 pass to form a flat hardcoat layer having a thickness of approximately 60 µm, and a decorative film was obtained.

### Comparative Example 3

A decorative layer was prepared in the same manner as in Example 1, and, on this decorative layer, 6 pass printing of an independent dot-patterned hardcoat layer was performed by using an inkjet printer and the transparent ink for a hardcoat (H1). Using a metal halide lamp, ultraviolet irradiation was performed at a dose of approximately 410 mJ/cm² per 1 pass, and a decorative film was obtained. Note that the area-equivalent circular diameter of dot was approximately 205 µm, the center-to-center distance of dots was approximately 566 µm, and the maximum height of dot was approximately 61 µm.

### Physical property evaluation test 1

Properties of the decorative film were evaluated by using the following method. Note that the pencil hardness test and the abrasion test serve as indicators for scratch resistance of the decorative film.

### Elongation test

The decorative film was cut to a size of 1 in × 4 in to prepare a test piece. In accordance with JIS K 7127, the test piece was placed on a tensile tester (A&D Company, Toshima-ku, Tokyo, Japan) in a manner that the gap of the test piece was 5 cm, to measure the elongation at break of the decorative film. The results are shown in Table 3 and Table 4.

### Pencil hardness test

The decorative film was adhered to an aluminum sheet having a thickness of 1 mm, and the pencil hardness of the decorative film was evaluated under load conditions of 1000 g in accordance with JIS K5600-5-4. The results are shown in Table 3 and Table 4.

### Abrasion test

A test piece was prepared by adhering the decorative film to an aluminum sheet having a size of 100 mm × 100 mm × 1 mm. In accordance with JIS K 7204, the test piece was placed on a Taber abrasion tester (Tester Sangyo Co., Ltd., Iruma-gun, Saitama-ken, Japan), and abrasion test was performed using the abrasion wheel CS-17 under load conditions of 750 g. The appearance of the test piece was visually observed every 250 rotations, and the test was performed until the decorative layer disappeared. The value shown in Table 3 is the number of rotations at the time when the decorative layer disappeared when visually observed.

**[Table 3]**

| | | Example 1 | Example 2 | Comparative Example 1 | Comparative Example 2 | Comparative Example 3 |
|---|---|---|---|---|---|---|
| Hardcoat layer | | Independent dot | Independent dot | - | Flat | Independent dot |
| Flexible resin layer | | Continuously printed layer | Continuously printed layer | Continuously printed layer | - | - |
| Evaluation | Elongation percentage (%) | 45 | 40 | 79 | 2 | 31 |
| | pencil hardness | 2B | 3B | 5B | H | 6B |
| | Wear resistance (number of rotation) | 1,250 | 1,250 | 250 | 2,500 | 250 |

For Examples 3 and 4 and Comparative Examples 4 and 5, matte performance was evaluated in addition to the scratch resistance and elongation properties of the decorative films.

### Example 3

Using the inkjet printer and LUS 200 ink that were the same as those in Example 1, 6 pass printing of a decorative layer formed from black color bar was performed on a substrate film that was the same as that in Example 1. Using a metal halide lamp, ultraviolet irradiation was performed at a dose of approximately 90 mJ/cm² per 1 pass, and a decorative layer having a thickness of approximately 10 µm was prepared. On the obtained decorative layer, 6 pass printing of a flexible continuously printed resin layer was performed by using an inkjet printer and the transparent ink for a flexible resin (F1). Using a metal halide lamp, ultraviolet irradiation was performed at a dose of approximately 410 mJ/cm² per 1 pass to prepare a flexible continuously printed resin layer having a thickness of approximately 60 µm. Then, on the obtained flexible continuously printed resin layer, 6 pass printing of a joined dot pattern was performed by using an inkjet printer and the ink for flexible resin (F1). Using a metal halide lamp, ultraviolet irradiation was performed at a dose of approximately 410 mJ/cm² per 1 pass to prepare a flexible discontinuously printed resin layer having a thickness of 15 µm. Note that the joined dot pattern was prepared by setting the dot diameter to 100 µm and the center-to-center distance of dots to 175 µm in the digital data for the inkjet printer. In the digital data, the dots were not joined; however, because the transparent ink adhered to the flexible continuously printed resin layer by the inkjet printer expanded compared to the dot in the digital data, the actual dot was joined with adjacent dot through at least one position.

Next, on the obtained flexible discontinuously printed resin layer, 6 pass printing of an independent dot-patterned hardcoat layer was performed by using an inkjet printer and the transparent ink for a hardcoat (H2). Using a metal halide lamp, ultraviolet irradiation was performed at a dose of approximately 410 mJ/cm² per 1 pass, and a decorative film was obtained. Note that the area-equivalent circular diameter of dot was approximately 130 to approximately 205 µm, the center-to-center distance of dots was approximately 225 µm, and the maximum height of dot was approximately 12 µm.

### Example 4

A decorative film of Example 4 was prepared in the same manner as in Example 3 except for preparing an independent dot-patterned hardcoat layer in a manner that the area-equivalent circular diameter of dot was approximately from 360 to 440 µm, the center-to-center distance of dots was approximately 550 µm, and the maximum height of dot was approximately 28 µm.

### Comparative Example 4

A decorative film of Comparative Example 4 was prepared in the same manner as in Example 3 except that the independent dot-patterned hardcoat layer and the joined dot pattern were not formed.

### Comparative Example 5

A decorative film of Comparative Example 5 was prepared in the same manner as in Example 3 except that the independent dot-patterned hardcoat layer was not formed.

### Physical property evaluation test 2

For the matte performance of the decorative film, evaluation was performed based on the following 60 degree glossiness test.

### 60 Degree glossiness test

The 60 Degree glossiness of the decorative film was measured by using Portable Gloss Meter GMX-202, available from Murakami Color Research Laboratory, in accordance with JIS Z8741. The glossiness measurement was performed at three positions, and the average value was used as the representative value.

**[Table 4]**

| | | Example 3 | Example 4 | Comparative Example 4 | Comparative Example 4 |
|---|---|---|---|---|---|
| Hardcoat layer | | Independent dot | Independent dot | - | - |
| Flexible resin layer | | Discontinuously printed layer (joined dot) | Discontinuously printed layer (joined dot) | Continuously printed layer | Discontinuously printed layer (joined dot) |
| Evaluation | Elongation percentage (%) | 65 | 32 | 120 | 110 |
| | pencil hardness | B | B | 5B | 4B |
| | 60 Degree glossiness | 3.3 | 3.9 | 15.5 | 4.5 |

It will be apparent to those skilled in the art that various modifications can be made to the embodiments and the examples described above without departing from the scope of the present invention as defined by the claims. In addition, it will be apparent to those skilled in the art that various improvements and modifications of the present invention can be carried out without departing from the scope of the present invention.

### Reference Signs List

100, 200 Decorative film
102, 202 Substrate film
104, 204 Decorative layer
106 Flexible resin layer (Continuously printed layer)
206 Flexible resin layer (Discontinuously printed layer)
108, 208 Independent dot-patterned hardcoat layer

## Claims

1. A decorative film (200) comprising on a substrate film (202) sequentially a flexible resin layer (206) and an independent dot-patterned hardcoat layer (208), the decorative film having an elongation at break percentage of 10% or greater, the elongation at break being measured in accordance with JIS K 7127,
wherein, in the independent dot pattern of the hardcoat layer (208), a maximum height of the dots is 15 µm or greater, **characterized in that** the flexible resin layer (206) is a resin layer on which a protruded and recessed shape is provided.

2. The decorative film (200) according claim 1, the flexible resin layer (206) having a joined dot pattern.

3. The decorative film (200) according claim 1, wherein, in the independent dot pattern of the hardcoat layer (208), a maximum height of the dot is 100 µm or less, and an area-equivalent circular diameter of the dot is from 30 to 600 µm.

4. The decorative film (200) according to claim 1, wherein the independent dot pattern of the hardcoat layer (208) has a center-to-center distance from 40 to 800 µm between dots of adjacent dot pattern.

5. The decorative film (200) according to claim 2, wherein the joined dot pattern has an area-equivalent circular diameter of a dot smaller than the area-equivalent circular diameter of the independent dot pattern.

6. The decorative film (200) according to claim 1, wherein a pencil hardness of the decorative film (200) is 3B or greater, the pencil hardness being measured in accordance with JIS K5600-5-4.

7. The decorative film (200) according to claim 1, wherein 60 degree glossiness of the decorative film (200) is 20 or less, the 60 degree glossiness being measured in accordance with JIS Z8741.

8. The decorative film (200) according to claim 1, wherein the flexible resin layer ( 206) and the hardcoat layer 208) include a cured product of an ionizing radiation-curable ink.

9. The decorative film (200) according to claim 1, wherein a decorative layer (204) is contained in between the substrate film and the flexible resin layer (206)

10. The decorative film (200) according to claim 1, wherein the hardcoat layer ( 208) contains a (meth)acrylic resin or nanosilica particles.

11. The decorative film (200) according to claim 1, wherein the flexible resin layer ( 206) contains a (meth)acrylic resin.

12. The decorative film (200) according to claim 1, further comprising an adhesive layer.

13. A method of producing a decorative film (200), the method comprising
forming a flexible resin layer (206) by applying a first ionizing radiation-curable ink using an inkjet printer on a substrate film (202) and irradiating with ionizing radiation to cure the first ionizing radiation-curable ink, wherein the flexible resin layer (206) is a resin layer on which a protruded and recessed shape is provided; and
forming an independent dot-patterned hardcoat layer (208) by applying a second ionizing radiation-curable ink using an inkjet printer on the flexible resin layer (206) and irradiating with ionizing radiation to cure the second ionizing radiation-curable ink,
wherein, in the independent dot pattern of the hardcoat layer (208), a maximum height of the dots is 15 µm or greater.

## Patentansprüche

1. Eine dekorative Folie (200), die auf einer Substratfolie (202) sequenziell eine flexible Harzschicht (206) und eine mit einem unabhängigen Punktmuster versehene Hartbeschichtungsschicht (208) aufweist, wobei die dekorative Folie einen Bruchdehnungsprozentsatz von 10 % oder mehr hat, wobei die Bruchdehnung gemäß JIS K 7127 gemessen wird,
wobei in dem unabhängigen Punktmuster der Hartbeschichtungsschicht (208) eine maximale Höhe der Punkte 15 µm oder mehr beträgt, **dadurch gekennzeichnet, dass** die flexible Harzschicht (206) eine Harzschicht ist, auf der eine hervorstehende und vertiefte Form bereitgestellt ist.

2. Die dekorative Folie (200) nach Anspruch 1, wobei die flexible Harzschicht (206) ein verbundenes Punktmuster hat.

3. Die dekorative Folie (200) nach Anspruch 1, wobei in dem unabhängigen Punktmuster der Hartbeschichtungsschicht (208) eine maximale Höhe des Punkts 100 µm oder weniger beträgt und ein flächenäquivalenter Kreisdurchmesser des Punkts von 30 bis 600 µm beträgt.

4. Die dekorative Folie (200) nach Anspruch 1, wobei das unabhängige Punktmuster der Hartbeschichtungsschicht (208) einen Mittenabstand von 40 bis 800 µm zwischen Punkten angrenzender Punktmuster aufweist.

5. Die dekorative Folie (200) nach Anspruch 2, wobei das verbundene Punktmuster einen flächenäquivalenten Kreisdurchmesser eines Punkts hat, der kleiner als der flächenäquivalente Kreisdurchmesser des unabhängigen Punktmusters ist.

6. Die dekorative Folie (200) nach Anspruch 1, wobei eine Bleistifthärte der dekorativen Folie (200) 3B oder mehr beträgt, wobei die Bleistifthärte gemäß JIS K5600-5-4 gemessen wird.

7. Die dekorative Folie (200) nach Anspruch 1, wobei ein 60-Grad-Glanz der dekorativen Folie (200) 20 oder weniger beträgt, wobei der 60-Grad-Glanz gemäß JIS Z8741 gemessen wird.

8. Die dekorative Folie (200) nach Anspruch 1, wobei die flexible Harzschicht (206) und die Hartbeschichtungsschicht (208) ein gehärtetes Produkt einer durch ionisierende Strahlung härtbaren Tinte einschließt.

9. Die dekorative Folie (200) nach Anspruch 1, wobei zwischen der Substratfolie und der flexiblen Harzschicht (206) eine dekorative Schicht (204) enthalten ist.

10. Die dekorative Folie (200) nach Anspruch 1, wobei die Hartbeschichtungsschicht (208) ein (Meth)acrylharz oder Nanosilicateilchen enthält.

11. Die dekorative Folie (200) nach Anspruch 1, wobei die flexible Harzschicht (206) ein (Meth)acrylharz enthält.

12. Die dekorative Folie (200) nach Anspruch 1, ferner aufweisend eine Kleberschicht.

13. Ein Verfahren zum Produzieren einer dekorativen Folie (200), das Verfahren aufweisend:
Bilden einer flexiblen Harzschicht (206) durch Aufbringen einer ersten durch ionisierende Strahlung härtbaren Tinte unter Verwendung eines Tintenstrahldruckers auf eine Substratfolie (202) und Bestrahlen mit ionisierender Strahlung, um die erste durch ionisierende Strahlung härtbare Tinte zu härten, wobei die flexible Harzschicht (206) eine Harzschicht ist, auf der eine hervorstehende und vertiefte Form bereitgestellt ist; und
Bilden einer mit einem unabhängigen Punktmuster versehenen Hartbeschichtungsschicht (208) durch Aufbringen einer zweiten durch ionisierende Strahlung härtbaren Tinte unter Verwendung eines Tintenstrahldruckers auf die flexible Harzschicht (206) und Bestrahlen mit ionisierender Strahlung, um die zweite durch ionisierende Strahlung härtbare Tinte zu härten,
wobei in dem unabhängigen Punktmuster der Hartbeschichtungsschicht (208) eine maximale Höhe der Punkte 15 µm oder mehr beträgt.

## Revendications

1. Film décoratif (200) comprenant séquentiellement, sur un film de substrat (202), une couche de résine flexible (206) et une couche de revêtement dur (208) à motifs de points indépendants, le film décoratif ayant un pourcentage d'allongement à la rupture de 10 % ou plus, l'allongement à la rupture étant mesuré conformément à la norme JIS K 7127,
dans lequel, dans le motif de points indépendants de la couche de revêtement dur (208), une hauteur maximale des points est de 15 µm ou plus, **caractérisé en ce que** la couche de résine flexible (206) est une couche de résine sur laquelle est disposée une forme en saillie et en creux.

2. Film décoratif (200) selon la revendication 1, la couche de résine flexible (206) ayant un motif de points joints.

3. Film décoratif (200) selon la revendication 1, dans lequel, dans le motif de points indépendants de la couche de revêtement dur (208), une hauteur maximale du point est de 100 µm ou moins, et un diamètre circulaire équivalent à la surface du point va de 30 à 600 µm.

4. Film décoratif (200) selon la revendication 1, dans lequel le motif de points indépendants de la couche de revêtement dur (208) a une distance centre à centre de 40 à 800 µm entre des points de motif de points adjacents.

5. Film décoratif (200) selon la revendication 2, dans lequel le motif de points joints a un diamètre circulaire équivalent à la surface d'un point plus petit que le diamètre circulaire équivalent à la surface du motif de points indépendants.

6. Film décoratif (200) selon la revendication 1, dans lequel une dureté au crayon du film décoratif (200) est de 3B ou plus, la dureté au crayon étant mesurée conformément à la norme JIS K5600-5-4.

7. Film décoratif (200) selon la revendication 1, dans lequel une brillance à 60 degrés du film décoratif (200) est de 20 ou moins, la brillance à 60 degrés étant mesurée conformément à la norme JIS Z8741.

8. Film décoratif (200) selon la revendication 1, dans lequel la couche de résine flexible (206) et la couche de revêtement dur (208) comportent un produit durci d'une encre durcissable par rayonnement ionisant.

9. Film décoratif (200) selon la revendication 1, dans lequel une couche décorative (204) est contenue entre le film de substrat et la couche de résine flexible (206).

10. Film décoratif (200) selon la revendication 1, dans lequel la couche de revêtement dur (208) contient une résine (méth)acrylique ou des particules de nanosilice.

11. Film décoratif (200) selon la revendication 1, dans lequel la couche de résine flexible (206) contient une résine (méth)acrylique.

12. Film décoratif (200) selon la revendication 1, comprenant en outre une couche adhésive.

13. Procédé de production d'un film décoratif (200), le procédé comprenant :
la formation d'une couche de résine flexible (206) en appliquant une première encre durcissable par rayonnement ionisant à l'aide d'une imprimante à jet d'encre sur un film de substrat (202) et en irradiant avec un rayonnement ionisant afin de faire durcir la première encre durcissable par rayonnement ionisant, dans lequel la couche de résine flexible (206) est une couche de résine sur laquelle est disposée une forme en saillie et en creux ; et
la formation d'une couche de revêtement dur (208) à motifs de points indépendants en appliquant une seconde encre durcissable par rayonnement ionisant à l'aide d'une imprimante à jet d'encre sur la couche de résine flexible (206) et en irradiant avec un rayonnement ionisant afin de faire durcir la seconde encre durcissable par rayonnement ionisant,
dans lequel, dans le motif de points indépendants de la couche de revêtement dur (208), une hauteur maximale des points est de 15 µm ou plus.
